# EUROPEAN PATENT APPLICATION

(11) **EP 4 651 556 A1**
(43) Date of publication of application: **19.11.2025**
(21) Application number: 24741689.4
(22) Date of filing: 10.01.2024
(51) Int. Cl.: H04W 28/02, H04W 74/00, H04W 76/15, H04L 47/24, H04W 84/12

(54) **METHOD AND DEVICE FOR TRANSMISSION/RECEPTION BASED ON DYNAMIC USER PRIORITY ASSIGNMENT IN WIRELESS LAN SYSTEM**

(30) Priority: 13.01.2023 KR 20230005615
(71) Applicant: LG Electronics Inc., Yeongdeungpo-gu Seoul 07336 (KR)
(72) Inventor: JANG, Insun, Seoul 06772 (KR); CHOI, Jinsoo, Seoul 06772 (KR); BAEK, Sunhee, Seoul 06772 (KR)
(74) Representative: Plasseraud IP
(86) International application number: PCT/KR2024/000458
(87) International publication number: WO 2024/151068

(57) **Abstract**

Disclosed are a method and device for transmission/reception based on dynamic user priority assignment in a wireless LAN system. A method performed by a first station (STA) in a wireless LAN system according to an embodiment disclosed herein may comprise the steps of: transmitting, to a second STA, a request including information related to first traffic identifier (TID)-to-user priority (UP) (TID-to-UP) mapping; receiving, from the second STA, a response including at least one of the acceptance/rejection of the information related to the first TID-to-UP mapping or information related to second TID-to-UP mapping; and performing frame exchange with the second STA on the basis of the information related to the first TID-to-UP mapping or the information related to the second TID-to-UP mapping.

## Description

### [TECHNICAL FIELD]

The present disclosure relates to a method and device for performing transmission and reception based on dynamic user priority assignment in a Wireless Local Area Network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [DISCLOSURE]

### [TECHNICAL PROBLEM]

The technical object of the present disclosure is to provide a method and device for performing transmission and reception based on dynamic user priority assignment in a Wireless Local Area Network (WLAN) system.

The technical object of the present disclosure is to provide a method and device for configuring/indicating mapping information between a traffic ID (TID) and/or a low latency ID (LL ID) and a user priority (UP) in a WLAN system.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a wireless LAN system according to an aspect of the present disclosure may comprise: transmitting, to a second STA, a request including information related to a first traffic identifier (TID)-to-user priority (UP) (TID-to-UP) mapping; receiving, from the second STA, a response including at least one of whether to accept the information related to the first TID-to-UP mapping or information related to a second TID-to-UP mapping; and performing a frame exchange with the second STA based on the information related to the first TID-to-UP mapping or the information related to the second TID-to-UP mapping.

A method performed by a second STA in a wireless LAN system according to an additional aspect of the present disclosure may comprise: receiving, from a first STA, a request including information related to a first traffic identifier (TID)-to-user priority (UP) (TID-to-UP) mapping; transmitting, to the first STA, a response including at least one of information related to acceptance of information related to the first TID-to-UP mapping or information related to a second TID-to-UP mapping; and performing a frame exchange with the first STA based on the information related to the first TID-to-UP mapping or the information related to the second TID-to-UP mapping.

### [Technical Effects]

According to the present disclosure, a method and device for performing transmission and reception based on dynamic user priority assignment in a Wireless Local Area Network (WLAN) system may be provided.

According to the present disclosure, a method and device for configuring/indicating mapping information between a traffic ID (TID) and/or a low latency ID (LL ID) and a user priority (UP) in a WLAN system may be provided.

According to the present disclosure, there is a technical effect that allows for flexibly assigning a TID and/or an LL ID to a UP to transmit traffic requiring low latency according to requirements.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 illustrates a quality of service (QOS) characteristic element applicable to an embodiment of the present disclosure.
FIG. 9 illustrates an SCS descriptor element applicable to an embodiment of the present disclosure.
FIG. 10 illustrates an Traffic classification (TCLAS) element format that can be applied to an embodiment of the present disclosure.
FIG. 11 illustrates an Intra-Access Category Priority element format that can be applied to an embodiment of the present disclosure.
FIG. 12 illustrates an example of a TID-to-UP mapping field according to an embodiment of the present disclosure.
FIG. 13 illustrates another example of a TID-to-UP mapping field according to an embodiment of the present disclosure.
FIG. 14 illustrates the other example of a TID-to-UP mapping field according to an embodiment of the present disclosure.
FIG. 15 illustrates the other example of a TID-to-UP mapping field according to an embodiment of the present disclosure.
FIG. 16 illustrates an example of a case where an AP announces a DUP capability.
FIG. 17 illustrates an example of a case where an AP announces a DUP capability and a DUP mapping element.
FIG. 18 illustrates a DUP mapping tear-down according to an embodiment of the present disclosure.
FIG. 19 illustrates an operation flow chart by a first STA according to an embodiment of the present disclosure.
FIG. 20 illustrates an operation flow chart by a second STA according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

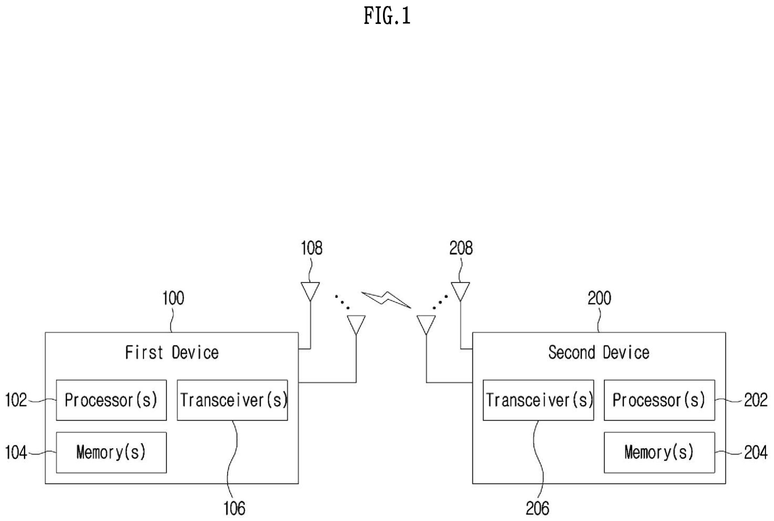

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

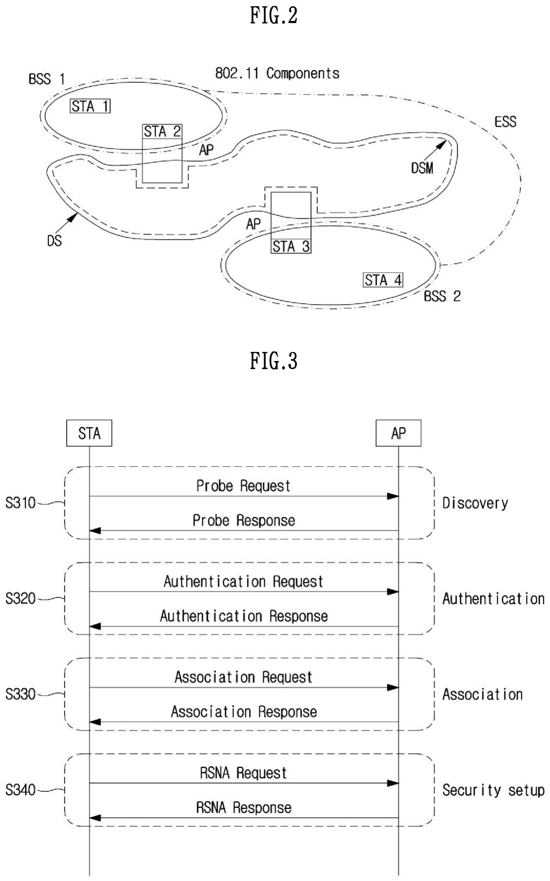

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

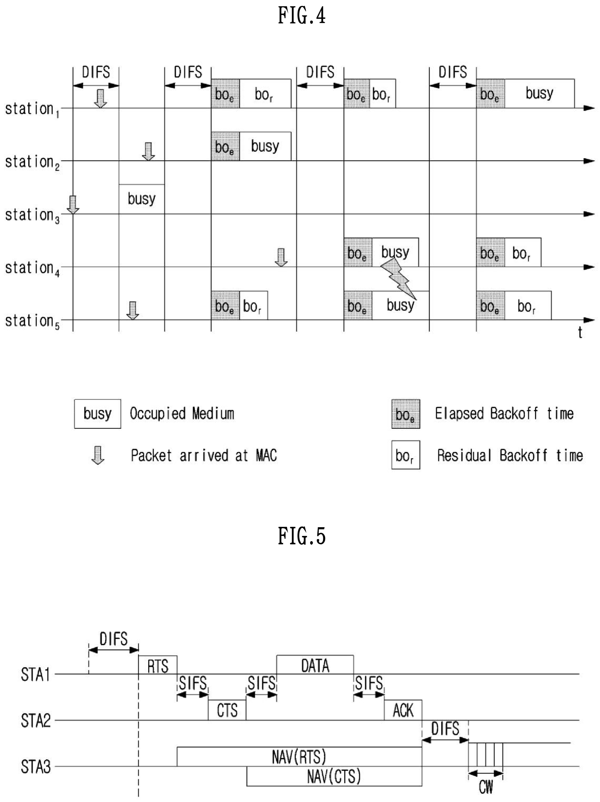

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

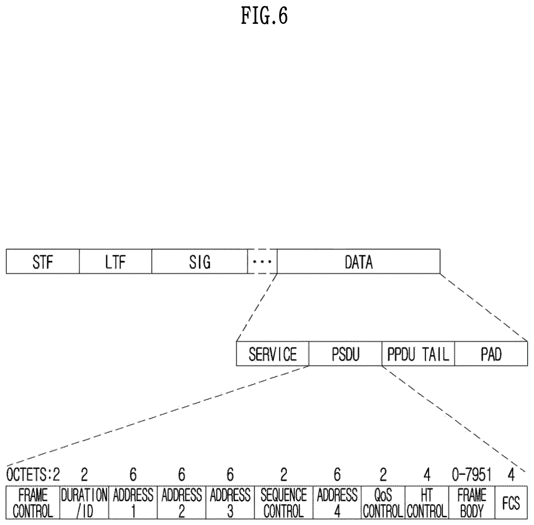

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

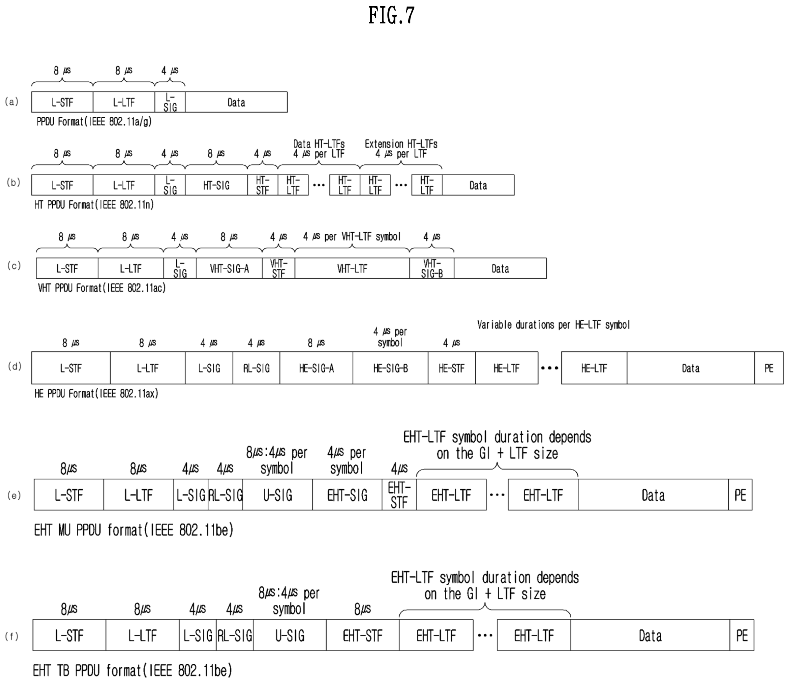

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Quality of service characteristics element

A QoS characteristic element defined in a wireless LAN system includes a set of parameters defining characteristics and QoS expectations of a traffic flow. In this regard, in terms of a specific non-AP EHT STA, the QoS characteristic element is used by the EHT AP and the non-AP EHT STA to support QoS traffic transfer using a stream classification service (SCS) procedure and a restricted TWT procedure.

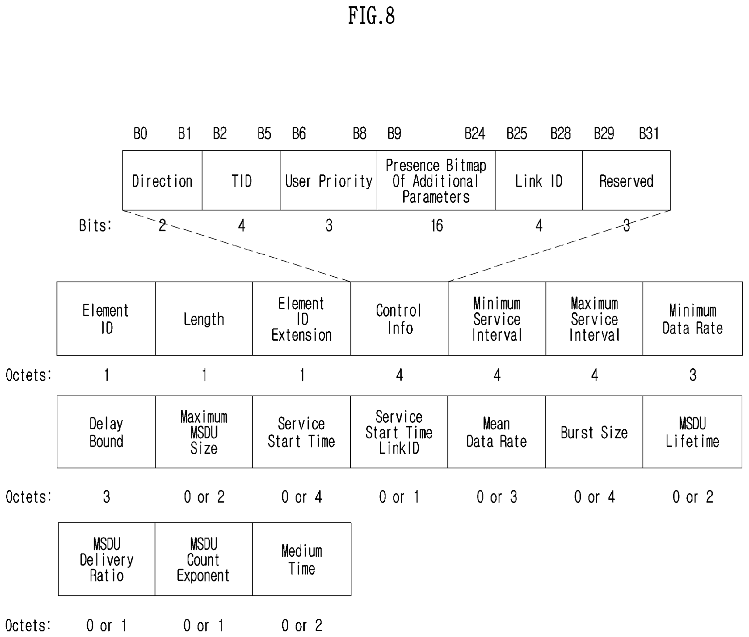

FIG. 8 illustrates QoS characteristic elements applicable to an embodiment of the present disclosure.

Specifically, the Control Info field includes a Direction subfield, a Traffic ID (TID) subfield, a User Priority (UP) subfield, a Presence Bitmap Of Additional Parameters subfield, a LinkID subfield, and a reserved bit (e.g., 3 bits).

The direction subfield specifies the direction of the data described by the corresponding element, and indicates uplink, downlink, direct link, or reserved. Here, uplink means that MSDU(s) or A-MSDU(s) are transmitted from a non-AP STA to an AP, downlink means that MSDU(s) or A-MSDU(s) are transmitted from an AP to a non-AP STA, and direct link means that MSDU(s) or A-MSDU(s) are transmitted over a P2P (Peer-to-Peer) link.

The TID subfield contains the TID value of the data frame described by the element. The TID subfield is set to the same value as the UP subfield. Here, values 8 to 15 of the TID subfield are reserved. In this regard, the presence of the TID subfield may be for future extension to allow conveying TID values independent of user priority (UP).

The UP subfield contains the UP value (one of 0 to 7) of the data frame described by the element. If a traffic classification (TCLAS) element is present in the SCS request frame containing the element, the UP subfield is set to the UP value specified in the TCLAS element.

The Presence Bitmap Of Additional Parameters subfield contains a bitmap whose ith entry is set to 1 if the ith field starting from the Maximum MSDU Size field is present in that element. For each field starting from the Maximum MSDU Size field, the value 0 is reserved.

The Link ID subfield contains a link identifier corresponding to the link on which a direct link transmission is to occur. If the Direction subfield is equal to any value except a value indicating a direct link, that subfield is reserved.

The Minimum Service Interval field contains an unsigned integer specifying the minimum interval (e.g., in milliseconds (ms)) between two consecutive SPs (service periods, scheduled periods) to which a frame exchange (e.g., UL/DL/direct link based frame exchange) is allocated. The Maximum Service Interval field contains an unsigned integer specifying the maximum interval (e.g., in ms) between two consecutive SPs (service periods, scheduled periods) to which a frame exchange (e.g., UL/DL/direct link based frame exchange) is allocated. In this regard, the value of the Maximum Service Interval field is greater than or equal to the value of the Minimum Service Interval field.

The Minimum Data Rate field contains an unsigned integer specifying the minimum data rate (e.g., kilobits per second) specified in the MAC SAP for transmission of MSDU(s) or A-MSDU(s) belonging to the traffic flow described by that element.

The delay bound field contains an unsigned integer specifying the maximum time (in microseconds) allowed to transmit MSDU(s) or A-MSDU(s) belonging to the traffic flow described by the element.

The Maximum MSDU Size field contains an unsigned integer specifying the maximum size (in octets) of the MSDU(s) or A MSDU(s) belonging to the traffic flow described by the element.

The Service Start Time field contains an unsigned integer that specifies the expected time (e.g., in microseconds) when traffic starts for the associated TID. Here, the Service Start Time indicates to the AP the time when the STA is expected to exchange frames corresponding to the TID specified in that element. The field indicates the low-order four octets of the TSF timer associated with the link specified in the Link ID field at the expected SP start.

The four least significant bits (LSBs) of the Service Start Time LinkID field indicate the link identifier corresponding to the link for which the TSF timer is used to indicate the service start time. The four most significant bits (MSBs) are reserved. This field is present only if the Service Start Time field is present.

The Mean Data Rate field indicates the average data rate (e.g., in kilobits per second) specified in the MAC SAP for transmission of MSDU(s) or A-MSDU(s) belonging to the traffic flow within the bounds of that element.

The Burst Size field is 4 octets in length and contains an unsigned integer specifying the maximum burst (i.e., in octets) of MSDU(s) or A-MSDU(s) belonging to a traffic flow that arrives at the MAC SAP within the time specified in the Delay Limit field.

The MSDU Lifetime field contains an unsigned integer specifying the maximum time (in milliseconds) after which an MSDU may become unusable at the MAC data service interface, even if the MSDU has been received by the receiver. Thus, the MSDU transmitter may consider discarding such an MSDU at the transmitter before it is transmitted over-the-air. The time specified in this field is greater than or equal to the time specified in the Delay Limit field (if present).

The MSDU Delivery Info field contains MSDU delivery information. The MSDU Delivery Info field contains an MSDU Delivery Ratio subfield and an MSDU Count Exponent subfield. Here, the MSDU Delivery Ratio subfield specifies an MSDU loss requirement (e.g., 95% to 99.9999%). The MSDU Count Exponent subfield contains an unsigned integer that specifies an exponent for calculating the number of received MSDUs used to calculate the MSDU delivery ratio. In this case, the number of received MSDUs is equal to 10 MSDU count exponents. If a delay bound is not specified, the MSDU Delivery Info subfield does not exist.

### Dynamic user priority assignment method

In a conventional wireless LAN system (e.g., IEEE 802.11 standard), an STA receives a traffic ID (TID) along with a mac service data unit (MSDU) based on a priority parameter from an upper layer of a medium access control (MAC). At this time, TID 0 to TID 7 are considered as user priorities (UPs), and each UP is mapped to a determined access category (AC).

However, recently, traffic of applications/services requiring low latency (LL)/latency sensitivity (hereinafter referred to as LL traffic for clarity of explanation) has different requirements. Therefore, it may be difficult to differentiate (i.e. classify) LL traffic with only the existing TID 0 to TID 7.

Therefore, a method may be considered to differentiate LL traffic by extending TID 8 to TID 15 (e.g., TID 8 to TID 15 used in the existing traffic specification (TSPEC)) or by assigning a different identification set to each TID. At this time, a method capable of determining UP due to a new priority parameter is required.

Considering this point, the present disclosure proposes a method for dynamically allocating UPs by considering LL traffic.

In the method described in the present disclosure, specific names (i.e., names) are examples and may be changed/replaced and applied, and STAs may include AP STAs or non-AP STAs.

In this regard, information that can classify LL traffic may include one or more of the following information:
- Traiffic ID (TID): It may be extended from TID 8 to TID 15 along with existing TID 0 to TID 7
- low latency ID (LL ID): An identifier (ID) for distinguishing LL traffic for each TID

For example, one LL traffic may be classified as a 2-tuple <TID, LL ID>. As a specific example, if LL ID 0 to LL ID 3 may be assigned to TID 6, any LL traffic corresponding to TID 6 may be classified as <TID 6, LL ID 0>. The present disclosure is not limited to the example, and the LL ID may be configured independently for the TID.

The present disclosure proposes a method for classifying LL traffic based on the aforementioned TID (hereinafter, Embodiment 1), a method for classifying LL traffic based on the aforementioned LL ID (hereinafter, Embodiment 2), and an application condition and operation of dynamic UP mapping (hereinafter, Embodiment 3) through specific examples.

The embodiments described below describe various examples related to a novel dynamic TID-to-UP mapping that is distinct from the existing fixed TID-to-UP mapping. The dynamic TID-to-UP mapping of the present disclosure may be applied to replace the existing fixed TID-to-UP mapping, or the existing fixed TID-to-UP mapping may be applied as a default setting (e.g., when a specific condition is not satisfied) while the dynamic TID-to-UP mapping of the present disclosure may be additionally applied (e.g., when a specific condition is satisfied).

In the description below, information related to TID-to-UP mapping may include information indicating dynamic TID-to-UP mapping (i.e., a UP mapped to a TID, or a TID mapped to a UP), a timer to which dynamic TID-to-UP mapping is applied (i.e., a time to perform channel access and/or frame exchange by applying the mapping), etc.

The embodiments/methods described below are distinguished only for the sake of clarity of explanation, and some components in some embodiments/methods may be replaced with, or combined/combined with, components in other embodiments/methods.

### Embodiment 1

The present embodiment relates to a method of extending TID 8 to TID 15 in relation to dynamic UP (DUP) mapping.

When the TID concept is extended to TID 8 to TID 15, one or more of the following methods 1-1 and 1-2 may be used to assign a user priority (UP) to each TID.

### (Method 1-1)

The method relates to a method of utilizing a stream classification service (SCS) process in relation to dynamic UP (DUP) mapping.

In the SCS process, an SCS request/response frame is used for SCS negotiation between an AP and a STA, and the SCS request/response frame may include an information element (IE) that may indicate UP.

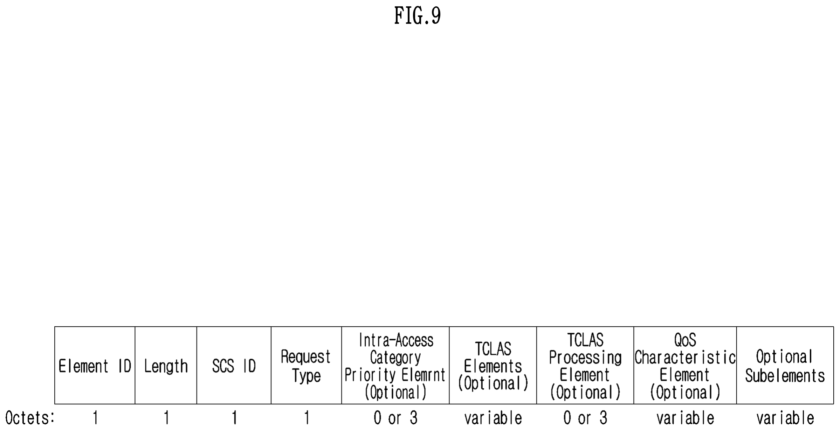

FIG. 9 illustrates an SCS descriptor element that may be applied to an embodiment of the present disclosure.

Referring to FIG. 9, the SCS descriptor element may include a Traffic Classification (TCLAS) element that may indicate a UP, an Intra-Access Category Priority (AC) element, and/or a QoS Characteristics element.

For example, as illustrated in FIG. 8, the control information field format in the QoS characteristic element may include a user priority subfield.

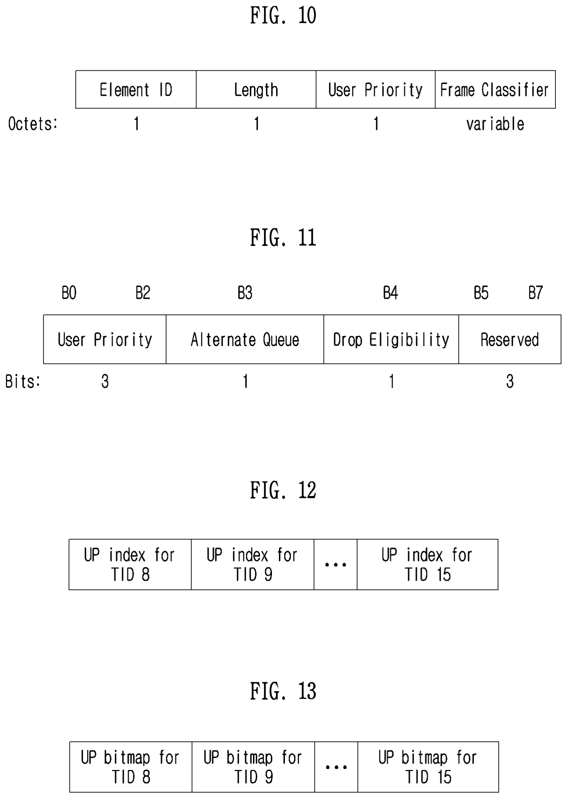

FIG. 10 illustrates a Traffic classification (TCLAS) element format that may be applied to an embodiment of the present disclosure.

Referring to FIG. 10, the TCLAS element format may include an Element ID subfield, a Length subfield, a User Priority subfield, and a Frame Classifier subfield.

FIG. 11 illustrates an intra-access category priority element format that may be applied to an embodiment of the present disclosure.

Referring to FIG. 11, the intra-access category priority element format may include a User Priority subfield, an Alternate Queue subfield, and a Drop Eligibility subfield.

In a wireless LAN system, TID 8 to TID 15 may be indicated using a 4-bit TID field. Therefore, in case of maintaining the existing UP, TID 8 to TID 15 may be mapped as indicated by the UP field. However, in case of extending to a number of UPs greater than UP 0 to UP 7 in the existing wireless LAN system, modification to the element/format including the UP subfield as described above is required.

For example, the field size of the UP subfield included in the QoS characteristic element (e.g., see FIG. 8) may be increased. As a specific example, if some/all UPs from UP 8 to UP 15 are allowed, the UP subfield may be configured as 4 bits by additionally using the reserved 1 bit.

For example, the reserved value (e.g., 12 to 254) of the UP subfield included in the TCLAS element (e.g., see FIG. 10) may be used. As a specific example, if 8 or more UP(s) are allowed, the UP(s) may be allocated from 12, which is the start of the reserved value.

For example, the field size of the UP subfield included in the Intra-Access Category Priority element (e.g., see FIG. 11) may be increased. As a specific example, if some/all UPs among UP 8 to UP 15 are allowed, the UP subfield may be configured as 4 bits by additionally utilizing the reserved 1 bit.

With respect to the examples described above, the STA may apply at least one UP having the same value among the UP values in the three elements.

Additionally or alternatively, existing TID 0 to TID 7 may be mapped to UP as is. However, unlike the existing method, a rule may be applied that allows UPs that are not identical to the value of TID for fast transmission of LL traffic depending on the status of AC (Access Category) queues mapped to UP. In this case, the TID value and the UP value may be set differently. For example, even if the value of TID is 5, UP may be mapped to 6.

### (Method 1-2)

The method relates to a method of defining/introducing a new field or a new element in relation to dynamic UP (DUP) mapping and utilizing the same.

For dynamic UP allocation, a TID-to-UP mapping field such as in Fig. 12 may be utilized, and the field may be included in a specific element. Additionally or alternatively, the field may be included in one or more frames such as the following example.

For example, the TID-to-UP mapping field may be included in a beacon frame, a probe response frame, etc., and may be announced by the AP. As another example, the TID-to-UP mapping field may be included in an association request/response frame, an SCS request/response frame, etc., and may be utilized for individual negotiation between the AP and the STA.

FIG. 12 illustrates an example of a TID-to-UP mapping field according to an embodiment of the present disclosure.

Referring to FIG. 12, the TID-to-UP mapping field may include a subfield (e.g., an UP Index for TID N subfield, where N is 8 to 15) indicating an UP index mapped/corresponding to each TID for one or more of TID 8 to TID 15. In this regard, assuming that there are 8 existing UPs, the UP index may indicate an UP using a value of 0 to 7.

Additionally or alternatively, the above-described example may be flexibly reduced or expanded. For example, if a new UP for LL traffic, etc. is added, the corresponding UP index value may be increased with a larger number of bits. Conversely, if UPs for LL traffic, etc. are restricted, the number of bits may be adjusted to indicate as many indices as the number of UPs to be applied.

Additionally or alternatively, if another UP is allowed for one or more TIDs among the existing TIDs 0 to TID 7 for LL traffic, etc., the corresponding UP value may also be indicated by an UP index subfield (e.g., UP Index for TID N subfield). Conversely, if TIDs for LL traffic, etc. are restricted, only as many UP index subfields as the number of TIDs to be applied (e.g., UP Index for TID N subfield) may be included.

In the case of using the TID-to-UP mapping field format exemplified in Fig. 12, it may not always indicate the UP index for the corresponding TID. Therefore, in order to reduce overhead, a presence subfield may be additionally defined in the front, through which the presence of a subfield indicating the UP index of each TID may be indicated. For example, a presence bitmap according to the number of UP index subfields (e.g., UP Index for TID N subfield) may be included in the corresponding field format.

Additionally or alternatively, the example in FIG. 12 above assumes that only one UP is mapped per TID. That is, more than two UP mappings are not possible for one TID. However, in order to flexibly map UPs for LL traffic corresponding to a certain TID depending on the situation, multiple UP mappings for one TID may be allowed. For this purpose, an UP bitmap may be used instead of an UP index, as in FIG. 13.

FIG. 13 illustrates another example of a TID-to-UP mapping field according to an embodiment of the present disclosure.

Referring to FIG. 13, the TID-to-UP mapping field may include a subfield indicating an UP bitmap mapped/corresponding to each TID for one or more of TID 8 to TID 15 (e.g., an UP Bitmap for TID N subfield, where N is 8 to 15).

In this regard, assuming that 8 UPs are used (i.e., UP 0 to UP 7), the UP bitmap subfield may indicate UP using 8 bits.

Additionally or alternatively, the above-described example may be flexibly reduced or expanded. For example, if another UP is allowed for one or more TIDs among the existing TIDs 0 to TID 7 for LL traffic, etc., a corresponding subfield can be added. Conversely, if the TIDs for LL traffic, etc. are restricted, only as many UP bitmap subfields as the number of TIDs to be applied (e.g., UP Bitmap for TID N subfield) may be present.

Additionally or alternatively, when a new UP is added for LL traffic, etc., the size (i.e., number of bits) of the corresponding UP bitmap may be increased by the corresponding number of bits. Conversely, when UPs for LL traffic, etc. are restricted, the bitmap size may be adjusted by the number of UPs to be applied.

In the case of using the TID-to-UP mapping field format exemplified in Fig. 13, it may not always be necessary to indicate an UP bitmap for the corresponding TID. Therefore, in order to reduce overhead, a presence subfield may be additionally defined in the front, through which the presence of a subfield indicating an UP bitmap of each TID may be indicated. For example, a presence bitmap according to the number of UP bitmap subfields (e.g., UP Bitmap for TID N subfield) may be included in the corresponding field format.

With respect to the TID-to-UP mapping field formats exemplified in FIGS. 12 and 13, the example in FIG. 12 may have a reduced bit overhead compared to the example in FIG. 13, but the example in FIG. 13 has an advantage in that multiple UP mappings are possible for one TID.

As an alternative to the examples described above, a method of indicating a TID for each UP may also be used, and the purpose/purpose is the same.

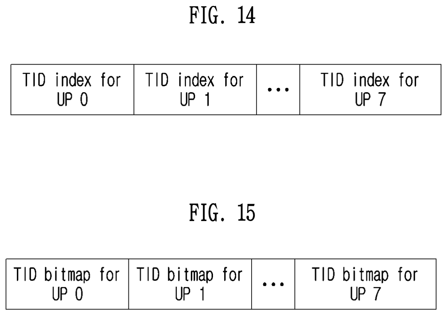

FIG. 14 illustrates another example of a TID-to-UP mapping field according to an embodiment of the present disclosure.

Referring to FIG. 14, the TID-to-UP mapping field may include a subfield (e.g., a TID Index for UP N subfield, where N is 0 to 7) indicating a TID index mapped/corresponding to each UP for one or more of UP 0 to UP 7. In this regard, the TID index may indicate a TID using a value of TID 8 to TID 15.

Additionally or alternatively, the above-described examples may be flexibly reduced or expanded. For example, if a new UP for LL traffic, etc. is added, a corresponding TID index subfield (e.g., TID Index for UP N subfield) may be added. Conversely, if UPs for LL traffic, etc. are limited, only TID index subfields (e.g., TID Index for UP N subfield) according to the number of UPs to be applied may be present.

Additionally or alternatively, if another UP is allowed for one or more of the existing TIDs 0 to 7 for LL traffic, etc., the corresponding TID index values may also be included. Conversely, if the TIDs for LL traffic, etc. are restricted, the number of bits for the index indication may be adjusted according to the number of TIDs to be applied.

In the case of using the TID-to-UP mapping field format exemplified in Fig. 14, it may not always be necessary to indicate a TID index for the corresponding UP. Therefore, in order to reduce overhead, a presence subfield may be additionally defined in the front, through which the presence of a subfield indicating a TID index of each UP may be indicated. For example, a presence bitmap according to the number of TID index subfields (e.g., TID Index for UP N subfield) may be included in the corresponding field format.

Additionally or alternatively, the example in FIG. 14 described above assumes that only one TID is mapped per UP. That is, mapping more than two TIDs to one UP is not possible. However, in order to flexibly map UPs to LL traffic corresponding to a certain TID depending on the situation, multiple UP mappings to one TID may be allowed. For this purpose, a TID bitmap may be used instead of a TID index, as in FIG. 15.

FIG. 15 illustrates another example of a TID-to-UP mapping field according to an embodiment of the present disclosure.

Referring to FIG. 15, the TID-to-UP mapping field may include a subfield indicating a TID bitmap mapped/corresponding to each UP for one or more of UP 0 to UP 7 (e.g., a TID Bitmap for UP N subfield, where N is 0 to 7).

In this regard, assuming that 8 TIDs are used (i.e., TID 8 to TID 15), the TID bitmap subfield may indicate the TID using 8 bits.

Additionally or alternatively, the above-described example may be flexibly reduced or expanded. For example, if another UP is allowed for one or more of the existing TIDs 0 to TID 7 for LL traffic, etc., the bitmap size may be increased by the corresponding bits. Conversely, if the TIDs for LL traffic, etc. are restricted, the bitmap size may be adjusted by the number of TIDs to be applied.

Additionally or alternatively, if a new UP is added for LL traffic, etc., a corresponding subfield may be added. Conversely, if UPs for LL traffic, etc. are restricted, there may be only as many TID bitmap subfields as the number of UPs to be applied (e.g., TID Bitmap for UP N subfield).

In the case of using the TID-to-UP mapping field format exemplified in FIG. 15, it may not always be necessary to indicate a TID bitmap for the corresponding UP. Therefore, in order to reduce overhead, a presence subfield may be additionally defined in the front, through which the presence of a subfield indicating a TID bitmap of each UP may be indicated. For example, a presence bitmap according to the number of TID bitmap subfields (e.g., TID Bitmap for UP N subfield) may be included in the corresponding field format.

With respect to the TID-to-UP mapping field formats exemplified in FIGS. 14 and 15, the example in FIG. 14 may have reduced bit overhead compared to the example in FIG. 15, but the example in FIG. 15 has the advantage of allowing multiple UP mappings for one TID.

### Embodiment 2

This embodiment relates to a method of using LL ID in relation to dynamic UP (DUP) mapping.

For dynamic UP allocation, the field proposed in this embodiment may be utilized, and the field may be included in a specific element. Additionally or alternatively, the field may be included in one or more frames, such as the following examples.

For example, the field may be included in a beacon frame, a probe response frame, etc., and may be announced by the AP. As another example, the field may be included in an association request/response frame, an SCS request/response frame, etc., and may be utilized for individual negotiation between the AP and the STA.

When a newly defined/introduced LL ID is used, one or more of the following methods 2-1 and 2-2 may be used.

### (Method 2-1)

The method relates to a method utilizing a stream classification service (SCS) process in relation to dynamic UP (DUP) mapping.

In this regard, the methods/examples in method 1-1 described in embodiment 1 may be applied identically/similarly, and a method such as the following example may be additionally considered.

For example, the LL ID may be indicated using a reserved bit or an additional bit of a QoS characteristic element (e.g., see FIG. 8), or the LL ID may be indicated using an existing field or a new field in the SCS request/response frame.

In this regard, as described above, since the LL ID may be used as a tuple with the TID, the indicated LL ID may be tupled with the TID indicated in the QoS characteristic element.

### (Method 2-2)

The method relates to a method of defining/introducing a new field or a new element in relation to dynamic UP (DUP) mapping and utilizing it.

Since LL ID may be used as a tuple with TID, a method of further configuring the contents of each subfield of the field format (e.g., FIGS. 12 to 15) proposed in Method 1-2 described in Embodiment 1 as a subfield by LL ID may be considered.

For example, with respect to the field format in FIG. 12, the UP index subfield for each TID (e.g., UP Index for TID N subfield) may be composed of UP index subfield(s) of each LL ID corresponding to the TID. As a specific example, when the LL ID has 0 to 1, the UP index subfield for TID 8 (UP Index for TID 8 subfield) may be composed of two UP index subfields.

For example, with respect to the field format in FIG. 13, the UP bitmap subfield for each TID (e.g., UP Bitmap for TID N subfield) may be composed of UP bitmap subfield(s) of each LL ID corresponding to the corresponding TID. As a specific example, when the LL ID has 0 to 1, the UP bitmap subfield for TID 8 (UP Bitmap for TID 8 subfield) may be composed of two UP bitmap subfields.

### Embodiment 3

This embodiment relates to conditions for applying the aforementioned dynamic UP mapping (i.e., DUP mapping) and operations of AP and STA for applying DUP mapping.

If DUP mapping is continuously applied until the STA is dissociated after associating with the AP, the application condition of DUP mapping may not be necessary. If DUP mapping is related to a specific type of traffic (e.g., LL traffic), since the traffic does not always exist, a time condition (e.g., a timer) for applying DUP mapping may be defined/introduced.

DUP mapping timer information may be included in information related to TID-to-UP mapping according to the present disclosure (e.g., DUP mapping element/information element (IE)). For example, the DUP mapping element may include one or more of the information indicating TID-to-UP mapping described with reference to FIGS. 12 to 15, or the DUP mapping timer information. That is, the DUP mapping timer information may be defined as one field included in the DUP mapping element.

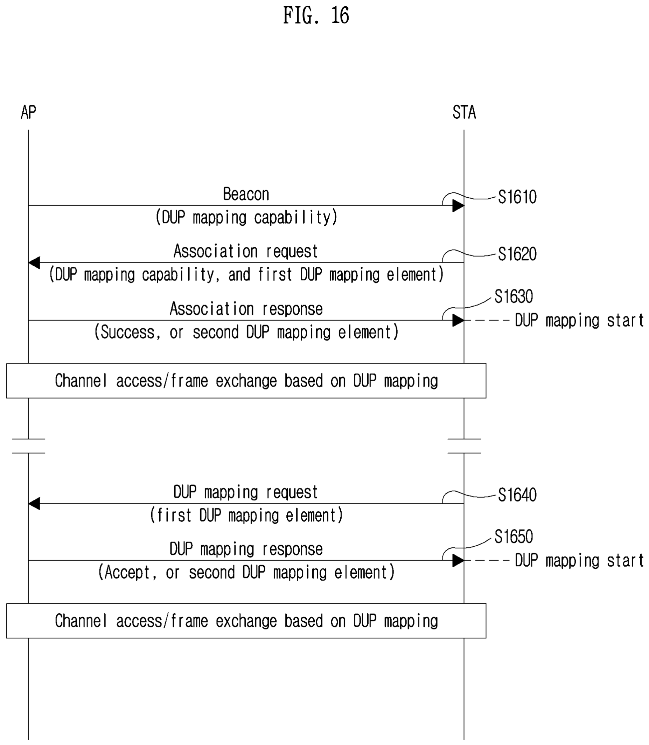

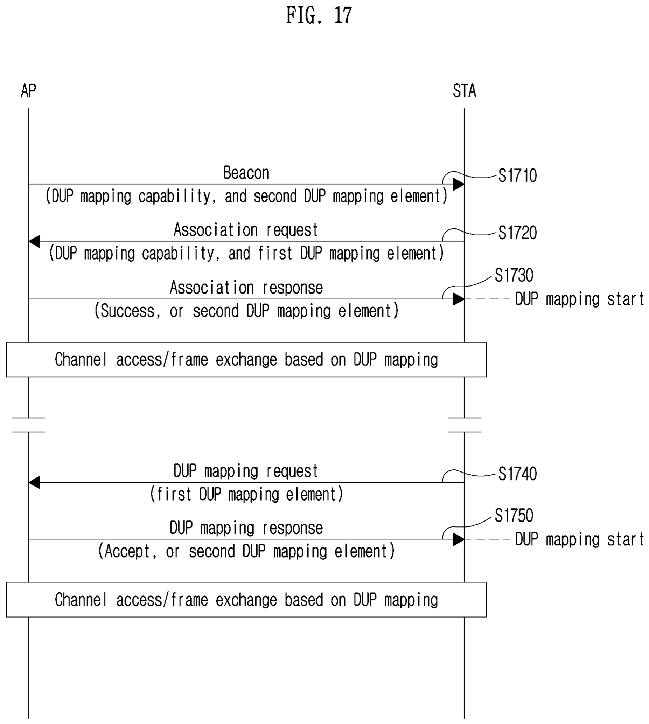

FIG. 16 and FIG. 17 are diagrams for explaining examples of operations of AP and STA for applying DUP mapping according to the present disclosure.

FIG. 16 illustrates an example of a case where an AP announces DUP capability.

In step S1610, the AP may announce DUP capability information indicating that DUP mapping is possible or that DUP mapping is supported, through a beacon, probe response, action frame, etc.

In step S1620, an STA having DUP capability may transmit a binding request message including a first DUP mapping element to the AP.

In step S1630, the AP may transmit to the STA an association response message including a status code indicating whether to accept TID-to-UP mapping, DUP mapping timer, etc. included in the first DUP mapping element requested by the STA (i.e., requested by the STA). If the association request is successful, information requested in the first DUP mapping element may also be accepted. Alternatively, if the AP rejects information included in the first DUP mapping element, the AP may transmit to the STA DUP mapping information that it supports or prefers (i.e., the second DUP mapping element).

Additionally or alternatively, the response message may not include a status code indicating acceptance of the first DUP mapping element, but may include the second DUP mapping element. That is, the response message may include information on acceptance of the first DUP mapping element, or one or more of the second DUP mapping elements.

Accordingly, while the DUP mapping timer is running, channel access/frame exchange between the AP and the STA may be performed based on the first DUP mapping element (if the STA's request is accepted) or based on the second DUP mapping element (if the STA's request is rejected).

In addition, after the exchange of DUP mapping related information is performed during the association process, or when the exchange of DUP mapping related information is not performed during the association process, in step S1640, the STA may transmit a DUP mapping request message including a first DUP mapping element to the AP. The first DUP mapping element of step S1640 may be the same as or different from the first DUP mapping element of step S1620. In step S1650, the AP may transmit a status code indicating whether to accept the first DUP mapping element requested by the STA, and/or a DUP mapping response message including a second DUP mapping element to the STA. The second DUP mapping element of step S1650 may be the same as or different from the second DUP mapping element of step S1630. Accordingly, while the DUP mapping timer is operating, channel access/frame exchange between the AP and the STA may be performed based on the first DUP mapping element or the second DUP mapping element.

FIG. 17 illustrates an example of a case where an AP announces a DUP capability and a DUP mapping element.

In step S1710, the AP may announce DUP capability information indicating that DUP mapping is possible or that DUP mapping is supported, and DUP mapping information supported by the AP (e.g., second DUP mapping element) through a beacon, probe response, action frame, etc. Here, the DUP mapping information supported by the AP may include information on candidate(s) of DUP mapping related information.

In step S1720, an STA having a DUP capability may transmit a association request message including a first DUP mapping element to the AP. The first DUP mapping element may include DUP mapping-related information supported/preferred by the STA among the second DUP mapping elements (i.e., candidate(s) of DUP mapping-related information) notified by the AP.

Additionally or alternatively, the STA may transmit to the AP a status code (e.g., 1-bit information) indicating whether it requests all of the second DUP mapping elements (i.e., candidate(s) of DUP mapping-related information) announced by the AP in the association request message. For example, if the STA applies all of the information included in the second DUP mapping element announced by the AP, it may transmit to the AP a status code (e.g., 1-bit information) indicating "all requested" instead of transmitting the first DUP mapping element. Otherwise, the STA may transmit to the AP a status code indicating partially requested, while informing the AP of the requested DUP mapping-related information through the first DUP mapping element.

In step S1730, the AP may transmit to the STA an association response message including a status code indicating whether to accept the mapping of TID-to-UP, DUP mapping timer, etc. included in the first DUP mapping element requested by the STA (i.e., requested by the STA). If the association request is successful, information requested by the first DUP mapping element may also be accepted. Alternatively, if the AP rejects the information included in the first DUP mapping element, the AP may transmit to the STA DUP mapping information that it supports or prefers (i.e., a second DUP mapping element that is identical to or different from the DUP mapping-related information notified by the AP in step S1710).

Additionally or alternatively, the response message may not include a status code indicating acceptance of the first DUP mapping element, but may include the second DUP mapping element. That is, the response message may include information on acceptance of the first DUP mapping element, or one or more of the second DUP mapping elements. Even if the request message transmitted by the STA includes information indicating that all DUP mapping-related information is requested, the AP may transmit a status code indicating success to the STA through the response message to notify that the corresponding DUP mapping-related information is ultimately applied.

Accordingly, while the DUP mapping timer is operating, channel access/frame exchange between the AP and the STA may be performed based on the first DUP mapping element or the second DUP mapping element.

In addition, after the exchange of DUP mapping related information is performed during the joining process, or when the exchange of DUP mapping related information is not performed during the association process, in step S1740, the STA may transmit to the AP a DUP mapping request message including a status code indicating whether to request all of the candidate(s) of DUP mapping related information notified by the AP, and/or a first DUP mapping element. The first DUP mapping element of step S1740 may be the same as or different from the first DUP mapping element of step S1720. In step S1750, the AP may transmit to the STA a DUP mapping response message including a status code indicating whether to accept the first DUP mapping element requested by the STA, and/or a second DUP mapping element. The second DUP mapping element of step S1750 may be the same as or different from the second DUP mapping element of step S1730. Accordingly, while the DUP mapping timer is operating, channel access/frame exchange between the AP and the STA can be performed based on the first DUP mapping element or the second DUP mapping element.

As an additional example, after the AP announces the DUP capability and/or the second DUP mapping element via a beacon, probe response, action frame, etc., the DUP mapping-related information corresponding to the announced second DUP mapping element may be continuously applied without a request from the STA. Accordingly, when an STA having the DUP mapping capability associates with the AP, the STA may perform channel access/frame exchange, etc. by using the DUP mapping element announced by the AP (i.e., applying the DUP mapping-related information announced by the AP).

Additionally, if the first AP is affiliated to the first AP multi-link device (MLD), when the second AP (e.g., the second AP in the first AP MLD, the second AP of the second AP MLD) enables/announces DUP mapping related information, the first AP may announce the same DUP mapping related information as the DUP mapping related information of the second AP, or may announce information indicating that the DUP mapping related information of the second AP is also applied to the first AP.

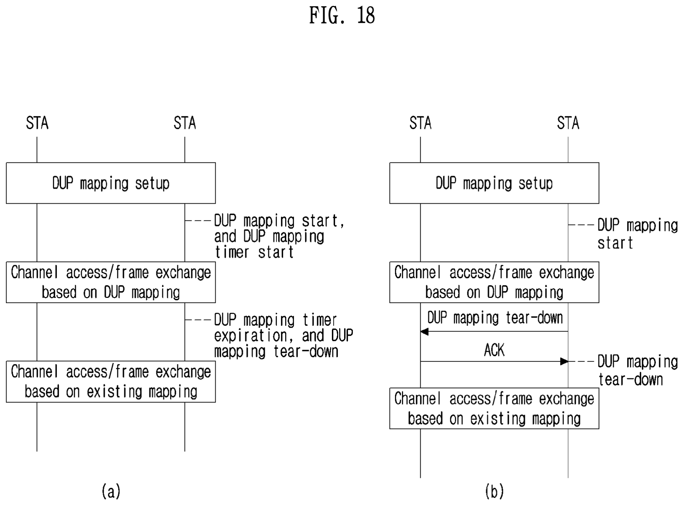

Additionally, with respect to the embodiments in the present disclosure, the DUP mapping established between STAs (e.g., between an AP and a STA) may not always/continuously be maintained. That is, when DUP mapping is not required, the conventional mapping method (i.e., the mapping method according to the association between TID and UP) may be reverted to. In this case, one or more of the methods described in FIG. 18 may be used.

FIG. 18 illustrates a DUP mapping tear-down according to an embodiment of the present disclosure.

(a) of FIG. 18 illustrates an implicit method based on a timer, and (b) of FIG. 18 illustrates an explicit method based on a frame for DUP mapping tear-down.

For example, in the case of an implicit method such as (a) of FIG. 18, it is assumed that a DUP mapping timer as described above is set, and when the timer expires, DUP mapping may no longer be applied. Accordingly, the existing mapping method may be applied.

For example, in the case of an explicit method such as (b) of FIG. 18, at least one STA among the STAs maintaining the mapping may transmit a frame to the AP for tearing down (i.e., releasing) the DUP mapping. In response to this, if a response (e.g., ACK) by the AP is received, the DUP mapping that was maintained may be returned to the existing mapping method.

Hereinafter, the overall operation process of the STA based on the embodiments in the present disclosure is specifically described. In the description, the STA may be an AP or a non-AP STA.

For example, the first STA may transmit a frame/PPDU including UP information mapped to a TID (hereinafter referred to as DUP mapping information).

Additionally or alternatively, the information for the TID may include the existing eight TIDs (e.g., TID 0 to TID 7). Additionally, the information for the TID may include at least one new TID (e.g., TID 8) other than the existing eight TIDs.

Additionally or alternatively, the information for the UP may include the existing eight UPs (e.g., UP 0 to UP 7). Additionally, the information for the UP may include at least one new UP (e.g., UP 8) other than the existing eight UPs.

Additionally or alternatively, at least one UP may be mapped to one TID.

Additionally or alternatively, the DUP mapping information may include timer information related to the time for which the configured DUP mapping is maintained.

Additionally or alternatively, when the first STA is an AP, the DUP mapping information may be transmitted in a management frame (e.g., a beacon frame).

Additionally or alternatively, the second STA may map the TID and the UP to each other based on the DUP mapping information received from the first STA.

In this regard, additionally, if the first TID is mapped to the first UP, traffic for the first TID may be included in an AC queue mapped to the first UP. Additionally, if the first TID is mapped to the first UP, when performing enhanced distributed channel access (EDCA) for traffic for the first TID, EDCA parameters for the AC mapped to the first UP may be used. Additionally or alternatively, mapping for the second UP to which the first TID may be previously mapped may still be maintained. Additionally or alternatively, the first STA or the second STA may transmit a frame for tearing down the configured DUP mapping. If the frame for tearing down is successfully transmitted, the first STA and the second STA may return to the existing TID-to-UP mapping.

Additionally or alternatively, the second STA may request DUP mapping from the first STA based on the DUP mapping information received from the first STA, or without the received DUP mapping information.

In this regard, additionally or alternatively, the second STA that received the response frame indicating SUCCESS for the DUP mapping request or the first STA that transmitted the response frame indicating SUCCESS may utilize the DUP mapping included in the DUP mapping request. Additionally, if the first TID is mapped to the first UP, traffic for the first TID may be included in an AC queue mapped to the first UP. Additionally, if the first TID is mapped to the first UP, when performing EDCA for traffic for the first TID, EDCA parameters for the AC mapped to the first UP may be used. Additionally or alternatively, mapping for the second UP to which the first TID may be previously mapped may still be maintained. Additionally or alternatively, the first STA or the second STA may transmit a frame for tearing down the established DUP mapping. If the frame for tear-down is transmitted successfully, the first STA and the second STA can return to the existing TID-to-UP mapping.

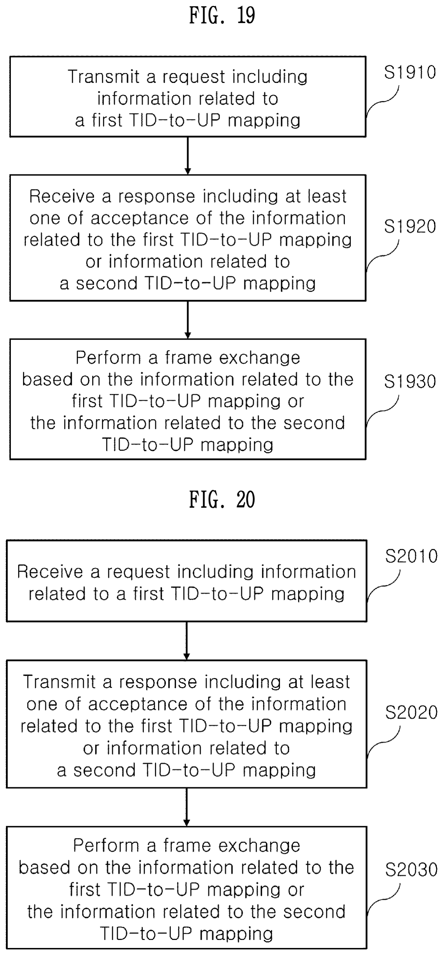

Hereinafter, the operation of the STA according to the embodiment of the present disclosure described above will be described through FIG. 19 and FIG. 20.

That is, the examples of FIG. 19 and FIG. 20 may correspond to some of the various examples of the present disclosure. For example, in FIG. 19 and FIG. 20, the first STA may correspond to a non-AP STA, and the second STA may correspond to an AP.

FIG. 19 illustrates an operation flowchart by the first STA according to the embodiment of the present disclosure.

Referring to FIG. 19, in step S1910, the first STA may transmit a request including information related to a first traffic identifier (TID)-to-user priority (UP) (TID-to-UP) mapping to the second STA.

In step S1920, the first STA may receive a response including at least one of information related to the first TID-to-UP mapping or information related to the second TID-to-UP mapping from the second STA.

For example, the first TID-to-UP mapping may include information related to a TID-to-UP mapping that the first STA intends to apply (or requests confirmation of whether application will be permitted), and the second TID-to-UP mapping may include information related to a TID-to-UP mapping that the second STA (e.g., the AP) permits. That is, the information related to the second TID-to-UP mapping may include information related to a TID-to-UP mapping permitted by the second STA.

As described above in the present disclosure, at least one of the information related to the first TID-to-UP mapping or the information related to the second TID-to-UP mapping may include one of an UP index for the TID, an UP bitmap for the TID, a TID index for the UP, or a TID bitmap for the UP.

For example, the applied TID may correspond to an element belonging to a set of TIDs including one or more of 8 to 15, or one or more additional TIDs, wherein the one or more additional TIDs may include at least one of 0 to 7.

For example, the applied UP may correspond to an element belonging to a set of UPs including one or more of 0 to 7, or one or more additional UPs.

Additionally or alternatively, at least one of the information related to the first TID-to-UP mapping or the information related to the second TID-to-UP mapping may further include a presence field. The presence field may indicate which TID-to-UP mapping-related subfield among a plurality of TID-to-UP mapping-related subfields exists. That is, at least one of the information related to the first TID-to-UP mapping or the information related to the second TID-to-UP mapping may include at least one TID-to-UP mapping-related subfield indicated by the presence field.

Additionally or alternatively, at least one of the information related to the first TID-to-UP mapping or the information related to the second TID-to-UP mapping may include information for a TID-to-UP mapping timer (e.g., a DUP mapping timer).

Additionally or alternatively, although not illustrated in FIG. 19, before the request in step S1910 is transmitted by the first STA, one or more of the capability information related to TID-to-UP mapping or the information related to TID-to-UP mapping may be announced by the second STA (e.g., AP). For example, the capability information or one or more of the information related to TID-to-UP mapping may be announced by the second STA through a beacon frame, a probe response frame, an action frame, or the like.

For example, the information related to the TID-to-UP mapping announced by the second STA may include information on candidate(s) of the TID-to-UP mapping that the second STA may support, and in step S1910, the first STA may request some/all of the TID-to-UP mappings among the candidate(s) to the second STA as information related to the first TID-to-UP mapping. Alternatively, the information related to the TID-to-UP mapping announced by the second STA may include information for the TID-to-UP mapping supported by the second STA, and the information for the announced TID-to-UP mapping may be applied without a request from the first STA.

Additionally or alternatively, a fixed TID-to-UP mapping (i.e., an existing TID-to-UP mapping) may be applied as a default based on the fact that a TID-to-UP mapping included in one or more of the information related to the first TID-to-UP mapping or the information related to the second TID-to-UP mapping is not applicable.

In step S1930, the first STA may perform frame exchange with the second STA based on information related to the first TID-to-UP mapping or information related to the second TID-to-UP mapping.

For example, the frame exchange may include data transmission and reception based on a specific type of traffic (e.g., low latency traffic).

The method performed by the first STA described in the example of FIG. 19 may be performed by the first device (100) of FIG. 1. For example, one or more processors (102) of the first device (100) of FIG. 1 may be configured to transmit a request including information related to the first TID-to-UP mapping to the second STA (200) through one or more transceivers (106), receive a response including whether to accept the information related to the first TID-to-UP mapping from the second STA (200) or one or more of the information related to the second TID-to-UP mapping, and perform frame exchange with the second STA (200) based on the information related to the first TID-to-UP mapping or the information related to the second TID-to-UP mapping. Furthermore, one or more memories (104) of the first device (100) may store instructions for performing the method described in the example of FIG. 19 or the examples described above when executed by one or more processors (102).

FIG. 20 illustrates an operation flow chart by a second STA according to an embodiment of the present disclosure.

Referring to FIG. 20 , in step S2010, the second STA may receive a request including information related to a first traffic identifier (TID)-to-user priority (UP) (TID-to-UP) mapping from the first STA.

In step S2020, the second STA may transmit a response to the first STA including whether to accept information related to the first TID-to-UP mapping, or one or more of information related to the second TID-to-UP mapping.

In this regard, the information related to the second TID-to-UP mapping may include information related to TID-to-UP mapping accepted by the second STA.

As described above in the present disclosure, at least one of the information related to the first TID-to-UP mapping or the information related to the second TID-to-UP mapping may include one of an UP index for the TID, an UP bitmap for the TID, a TID index for the UP, or a TID bitmap for the UP.

In step S2030, the second STA may perform frame exchange with the first STA based on the information related to the first TID-to-UP mapping or the information related to the second TID-to-UP mapping.

Information related to TID-to-UP mapping in FIG. 20, frame exchange, etc. overlaps with the content described in FIG. 19, so a detailed description thereof is omitted.

The method performed by the second STA described in the example of FIG. 20 may be performed by the second device (200) of FIG. 1. For example, one or more processors (202) of the second device (200) of FIG. 1 may be configured to receive a request including information related to the first TID-to-UP mapping from the first STA (100) through one or more transceivers (206), transmit a response including at least one of information related to the first TID-to-UP mapping or information related to the second TID-to-UP mapping to the first STA (100), and perform frame exchange with the first STA (100) based on the information related to the first TID-to-UP mapping or the information related to the second TID-to-UP mapping. Furthermore, one or more memories (204) of the second device (200) may store instructions for performing the method described in the example of FIG. 20 or the examples described above when executed by one or more processors (202).

In the existing wireless LAN system, only fixed TID-to-UP mapping is defined, but in the present disclosure, dynamic TID-to-UP mapping and/or LLID-to-UP mapping method is proposed by considering a specific type of traffic (e.g., LL traffic, etc.). Through the proposed method in the present disclosure, a new effect can be achieved in which a specific type of traffic can be transmitted according to requirements by flexibly assigning a TID to a UP.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first station (STA) in a wireless LAN system, the method comprising:
transmitting, to a second STA, a request including information related to a first traffic identifier (TID)-to-user priority (UP) (TID-to-UP) mapping;
receiving, from the second STA, a response including at least one of whether to accept the information related to the first TID-to-UP mapping or information related to a second TID-to-UP mapping; and
performing a frame exchange with the second STA based on the information related to the first TID-to-UP mapping or the information related to the second TID-to-UP mapping.

2. The method of claim 1,
wherein at least one of the information related to the first TID-to-UP mapping or the information related to the second TID-to-UP mapping includes one of an UP index for a TID, an UP bitmap for a TID, a TID index for an UP, or a TID bitmap for an UP.

3. The method of claim 1,
wherein a TID belongs to a set of TIDs including at least one of 8 to 15, or one or more additional TIDs.

4. The method of claim 3,
wherein the one or more additional TIDs include at least one of 0 to 7.

5. The method of claim 1,
wherein an UP belongs to a set of UPs including one or more of 0 to 7, or one or more additional UPs.

6. The method of claim 1,
wherein at least one of the information related to the first TID-to-UP mapping or the information related to the second TID-to-UP mapping includes a presence field, and
wherein at least one of the information related to the first TID-to-UP mapping or the information related to the second TID-to-UP mapping includes at least one TID-to-UP mapping related subfield indicated by the presence field.

7. The method of claim 1,
wherein at least one of the information related to the first TID-to-UP mapping or the information related to the second TID-to-UP mapping includes information for a TID-to-UP mapping timer.

8. The method of claim 1,
wherein, before the request is transmitted by the first STA, one or more of capability information related to a TID-to-UP mapping or information related to the TID-to-UP mapping is announced by the second STA.

9. The method of claim 1,
wherein, based on that a TID-to-UP mapping included in one or more of the information related to the first TID-to-UP mapping or the information related to the second TID-to-UP mapping is not applied, a fixed TID-to-UP mapping is applied as a default.

10. The method of claim 1,
wherein information related to the second TID-to-UP mapping includes information related to a TID-to-UP mapping allowed by the second STA.

11. The method of claim 1,
wherein the frame exchange includes data transmission and reception based on low-latency traffic.

12. An apparatus for a first station (STA) in a wireless local area network (WLAN) system, the apparatus comprising:
at least one transceiver; and
at least one processor connected to the at least one transceiver,
wherein the at least one processor is configured to:
transmit, to a second STA, a request including information related to a first traffic identifier (TID)-to-user priority (UP) (TID-to-UP) mapping;
receive, from the second STA, a response including at least one of whether to accept the information related to the first TID-to-UP mapping or information related to a second TID-to-UP mapping; and
perform a frame exchange with the second STA based on the information related to the first TID-to-UP mapping or the information related to the second TID-to-UP mapping.

13. A method performed by a second STA in a wireless LAN system, the method comprising:
receiving, from a first STA, a request including information related to a first traffic identifier (TID)-to-user priority (UP) (TID-to-UP) mapping;
transmitting, to the first STA, a response including at least one of information related to acceptance of information related to the first TID-to-UP mapping or information related to a second TID-to-UP mapping; and
performing a frame exchange with the first STA based on the information related to the first TID-to-UP mapping or the information related to the second TID-to-UP mapping.

14. An apparatus for a second station (STA) in a wireless local area network (WLAN) system, the apparatus comprising:
at least one transceiver; and
at least one processor connected to the at least one transceiver,
wherein the at least one processor is configured to:
receive, from a first STA, a request including information related to a first traffic identifier (TID)-to-user priority (UP) (TID-to-UP) mapping;
transmit, to the first STA, a response including at least one of information related to acceptance of information related to the first TID-to-UP mapping or information related to a second TID-to-UP mapping; and
perform a frame exchange with the first STA based on the information related to the first TID-to-UP mapping or the information related to the second TID-to-UP mapping.

15. A processing unit configured to control a station (STA) in a wireless local area network (WLAN) system, the processing unit comprising:
at least one processor; and
at least one computer memory operably connected to the at least one processor, and based on being executed by the at least one processor, storing instructions for performing a method according to any one claim of claims 1 to 11.

16. At least one non-transitory computer-readable medium storing at least one instruction, wherein:
the at least one instruction controls a device to perform a method according to any one claim of claims 1 to 11 in a wireless local area network (WLAN) system by being executed by at least one processor.
